# EUROPÄISCHE PATENTANMELDUNG

(11) **EP 1 810 640 A1**
(43) Veröffentlichungstag der Anmeldung: **25.07.2007**
(21) Anmeldenummer: 06025654.2
(22) Anmeldetag: 12.12.2006
(51) Int. Cl.: A61C 7/30

(54) **Orthodontische Befestigungsvorrichtung**

(30) Priorität: 18.01.2006 DE 102006003107
(71) Anmelder: DENTAURUM J.P. WINKELSTROETER KG, 75228 Ispringen (DE)
(72) Erfinder: Pace, Marc S., 75177 Pforzheim (DE)
(74) Vertreter: Hoeger, Stellrecht & Partner Patentanwälte

(57) **Zusammenfassung**

Die Erfindung betrifft eine orthodontische Befestigungsvorrichtung mit einem Bracket und einem Verriegelungsteil, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst zur Aufnahme eines Bogendrahtes sowie zwei im Abstand zueinander angeordnete Flügelpaare, die jeweils einen in gingivale Richtung und einen in okklusale Richtung vom Schlitz abstehenden Flügel aufweisen, und wobei das Verriegelungsteil eine Klammer umfasst mit zwei Klemmflügeln, deren freie Enden einander zugewandt sind und die zum Einsetzen eines Bogendrahtes in den Schlitz federelastisch aus einer Sperrstellung in eine Freigabestellung auseinander spreizbar sind. Um die orthodontische Befestigungsvorrichtung derart weiterzubilden, dass sie einen konstruktiv einfacheren und störungsunempfindlicheren Aufbau aufweist, wird erfindungsgemäß vorgeschlagen, dass sie eine Klammer aufweist, die zwischen den beiden Flügelpaaren angeordnet ist.

## Beschreibung

Die Erfindung betrifft eine orthodontische Befestigungsvorrichtung mit einem Bracket und einem Verriegelungsteil, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst zur Aufnahme eines Bogendrahtes sowie zwei im Abstand zueinander angeordnete Flügelpaare, die jeweils einen in gingivale Richtung und einen in okklusale Richtung vom Schlitz abstehenden Flügel aufweisen, und wobei das Verriegelungsteil eine Klammer umfasst mit zwei Klemmflügeln, deren freie Enden einander zugewandt sind und die zum Einsetzen eines Bogendrahtes in den Schlitz federelastisch aus einer Sperrstellung in eine Freigabestellung auseinander spreizbar sind.

Um im Rahmen einer kieferorthopädischen Behandlung Fehlstellungen von Zähnen zu korrigieren, ist es bekannt, an den Zähnen Brackets zu befestigen, die durch einen in den jeweiligen Schlitz der Brackets eingelegten elastischen Bogendraht miteinander verbunden werden. Über den Bogendraht können auf die Zähne Richtkräfte ausgeübt werden, so dass sich die Zahnstellung verändert. Zur Sicherung des Bogendrahtes in den Schlitzen der Brackets kommen häufig elastomere oder metallische Ligaturen zum Einsatz, die um die Flügel eines Flügelpaares herumgeführt werden und den Bogendraht im Schlitz zurückhalten. Es sind auch sogenannte selbstligierende Brackets bekannt, an denen ein Verriegelungsteil gehalten ist, das in einer Sperrstellung ein Entweichen des Bogendrahtes aus dem Schlitz verhindert und zum Einfügen des Bogendrahtes in den Schlitz in eine Freigabestellung überführt werden kann.

Eine orthodontische Befestigungsvorrichtung der eingangs genannten Art ist aus der EP 1 428 483 A1 bekannt. Als Verriegelungsteil kommen hierbei zwei Klammern zum Einsatz, wobei an den einander abgewandten Außenseiten der beiden Flügelpaare jeweils eine Klammer angeordnet ist. An die Klammern schließt sich außenseitig jeweils eine Abdeckung an, deren Kontur der Kontur des jeweiligen Flügelpaares entspricht, und die Klammern weisen jeweils zwei Klemmflügel auf mit einander zugewandten freien Enden, die in einer Sperrstellung einen Bogendraht im Schlitz zurückhalten und zum Einsetzen des Bogendrahtes in den Schlitz in eine Freigabestellung überführt werden können, indem sie federelastisch auseinander gespreizt werden. Die bekannte orthodontische Befestigungsvorrichtung zeichnet sich durch einen konstruktiv aufwändigen Aufbau aus, wobei zusätzlich zum Bracket zwei Klammern zum Einsatz kommen sowie zwei die Klammern außenseitig abdeckende Abdeckungen.

Aufgabe der vorliegenden Erfindung ist es, eine orthodontische Befestigungsvorrichtung der eingangs genannten Art derart weiterzubilden, dass sie einen konstruktiv einfacheren und störungsunempfindlicheren Aufbau aufweist.

Diese Aufgabe wird bei einer orthodontischen Befestigungsvorrichtung der gattungsgemäßen Art erfindungsgemäß dadurch gelöst, dass die orthodontische Befestigungsvorrichtung eine Klammer aufweist, die zwischen den beiden Flügelpaaren angeordnet ist.

Die erfindungsgemäße orthodontische Befestigungsvorrichtung zeichnet sich durch einen einfacheren Aufbau aus, da zwischen den beiden Flügelpaaren eine Klammer positioniert ist. Seitliche Abdeckungen der Klammer können dadurch entfallen und dies wiederum hat zur Folge, dass die Baugröße der orthodontischen Befestigungsvorrichtung sehr gering gehalten werden kann. Das Demineralisierungsrisiko kann dadurch verringert und die Mundhygiene kann vereinfacht werden. Mittels der erfindungsgemäßen orthodontischen Befestigungsvorrichtung kann eine Zahnfehlstellung durch den Einsatz verhältnismä-ßig geringer Kräfte korrigiert werden, die Gefahr einer Wurzelresorption wird dadurch minimiert. Zahnbewegungen können friktionsarm durchgeführt werden, und durch die verhältnimäßig geringe Baugröße der erfindungsgemäßen orthodontischen Befestigungsvorrichtung kann der Patientenkomfort gesteigert werden. Die orthodontische Befestigungsvorrichtung bildet ein selbstligierendes Bracket aus, mit dessen Hilfe die Behandlungszeit beim Wechsel eines Bogendrahtes verringert werden kann. Es wird ein schnelles Verschließen des Brackets ohne den zeitaufwändigen Einsatz separater Ligaturen möglich. Der zusätzliche Einsatz derartiger Ligaturen ist jedoch bei der erfindungsgemäßen orthodontischen Befestigungsvorrichtung nicht ausgeschlossen, sie können vielmehr bei der Aufwendung spezieller Behandlungsverfahren zusätzlich zum Einsatz kommen.

Von besonderem Vorteil ist es, wenn die orthodontische Befestigungsvorrichtung eine einzige Klammer umfasst, die zwischen den beiden Flügelpaaren angeordnet ist. Dies ermöglicht eine besonders einfache und störungsunempfindliche Konstruktion und die Herstellungskosten können gering gehalten werden.

Bevorzugt sind die beiden Klemmflügel C-förmig gekrümmt, denn dadurch können die Klemmflügel mit verhältnismäßig geringen Kräften federelastisch auseinander gespreizt werden ohne Gefahr einer plastischen Verformung der Klemmflügel.

Günstig ist es, wenn die beiden Klemmflügel einstückig miteinander verbunden sind. Bei einer derartigen Ausgestaltung weist die Klammer insgesamt eine ungefähr herzförmige Ausgestaltung auf, wobei sie oberhalb der freien Enden der Klemmflügel einen sich in Richtung des Schlitzes verjüngenden Einführabschnitt definiert. Durch Positionieren des Bogendrahtes im Einführabschnitt werden die Klemmflügel im Bereich ihrer freien Enden auseinander gespreizt und geben dadurch den Durchgang zum Schlitz frei, so dass der Bogendraht eingeführt werden kann. Die einstückige Ausgestaltung der Klammer vereinfacht darüber hinaus die Montage der orthodontischen Befestigungsvorrichtung und reduziert deren Herstellungskosten.

Bei einer bevorzugten Ausführungsform der orthodontischen Befestigungsvorrichtung erstreckt sich die Klammer in mesial-distaler Richtung von einem ersten Flügelpaar bis zu einem zweiten Flügelpaar. Die Klammer stellt somit eine Art Deckel dar, der den Freiraum zwischen den beiden Flügelpaaren mit Ausnahme einer Öffnung zwischen den freien Enden der Klemmflügel praktisch vollständig abdeckt.

Bei einer besonders kostengünstig herstellbaren Ausgestaltung der orthodontischen Befestigungsvorrichtung sind die Klemmflügel als Federelemente, insbesondere als Blattfedern ausgebildet.

Die Klemmflügel können aus Metall gefertigt sein.

Das Bracket kann als einteiliger Formkörper aus einem Keramikmaterial, aus Metall oder auch aus Kunststoff hergestellt sein.

Zur unverlierbaren Verbindung der Klammer mit dem Bracket ist bei einer vorteilhaften Ausführungsform vorgesehen, dass die Klammer einen von okklusal nach gingival verlaufenden Durchgang des Brackets durchgreift. Eine zusätzliche Befestigung der Klammer am Bracket kann dadurch entfallen.

Es kann beispielsweise vorgesehen sein, dass die beiden Flügelpaare über einen Steg miteinander verbunden sind, wobei sich der Durchgang zwischen dem Steg und der Bracketbasis erstreckt. Die Breite des Durchgangs kann hierbei dem Abstand zwischen den beiden Flügelpaaren entsprechen.

Alternativ oder ergänzend kann vorgesehen sein, dass die Klammer zwischen den beiden Flügelpaaren am Bracket befestigt ist. Beispielsweise können die beiden Flügelpaare von der Bracketbasis abstehen und die Klammer kann im Bereich zwischen den beiden Flügelpaaren an der Bracketbasis befestigt sein.

Vorzugsweise ist die Klammer mit dem Bracket stoffschlüssig verbunden, zum Beispiel verschweißt. Die stoffschlüssige Verbindung erfolgt mit Vorteil in mesial-distaler Richtung mittig zwischen den beiden Flügelpaaren oder durch die Bracketbasis.

Die nachfolgende Beschreibung zweier bevorzugter Ausführungsformen der Erfindung dient im Zusammenhang mit der Zeichnung der näheren Erläuterung. Es zeigen:
- Figur 1:: eine perspektivische Darstellung einer ersten Ausführungsform einer erfindungsgemäßen orthodontischen Befestigungsvorrichtung;
- Figur 2:: eine Seitenansicht der in Figur 1 dargestellten orthodontischen Befestigungsvorrichtung aus mesial-distaler Richtung;
- Figur 3:: eine Schnittansicht längs der Linie 3-3 in Figur 2;
- Figur 4:: eine perspektivische Darstellung einer zweiten Ausführungsform einer erfindungsgemäßen orthodontischen Befestigungsvorrichtung;
- Figur 5:: eine Seitenansicht der in Figur 4 dargestellten orthodontischen Befestigungsvorrichtung aus mesial-distaler Richtung und
- Figur 6:: eine Seitenansicht der in Figur 4 dargestellten orthodontischen Befestigungsvorrichtung aus okklusal-gingivaler Richtung.

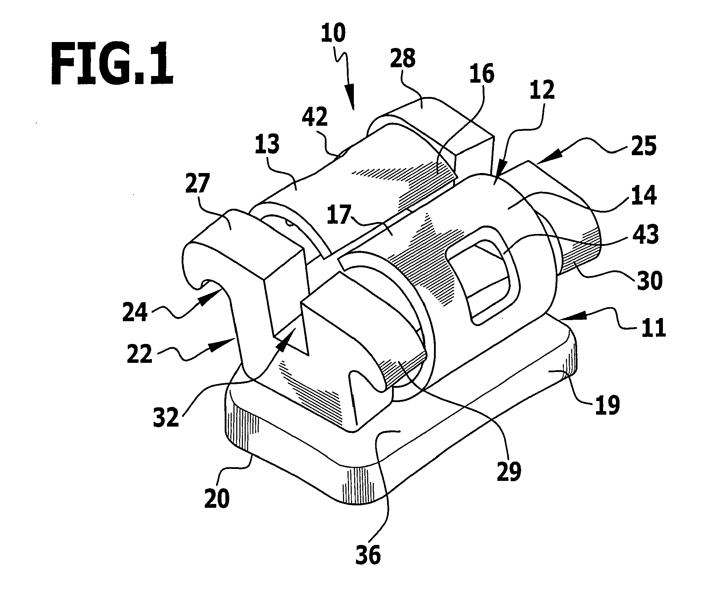

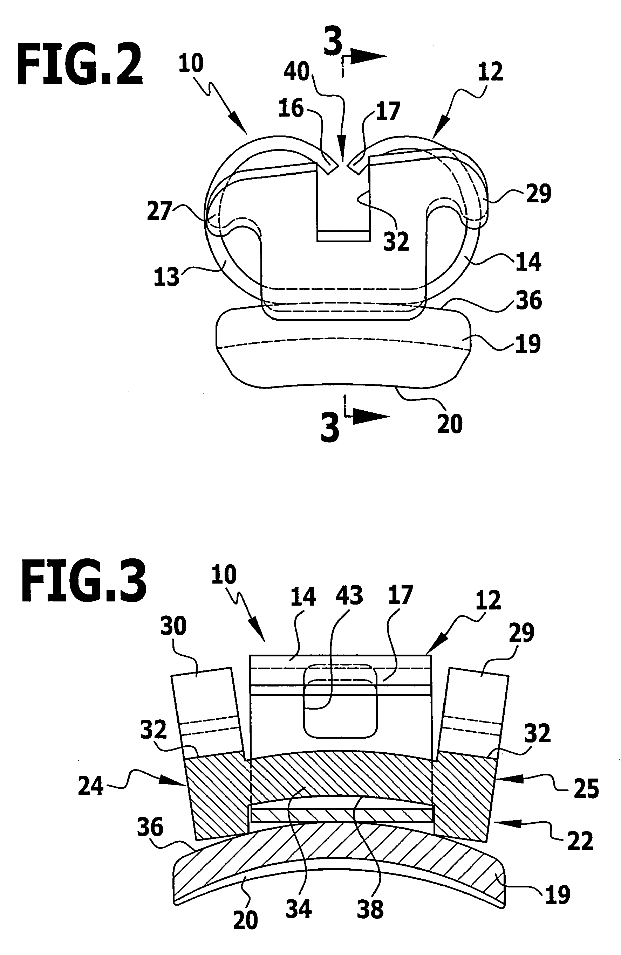

In den Figuren 1, 2 und 3 ist eine mit dem Bezugszeichen 10 belegte erste Ausführungsform einer erfindungsgemäßen orthodontischen Befestigungsvorrichtung schematisch dargestellt. Diese ist zweiteilig ausgebildet und umfasst ein Bracket 11 sowie ein Verriegelungsteil in Form einer ungefähr herz-förmig ausgestalteten Klammer 12 mit einem ersten, C-förmigen Klemmflügel 13 und einem zweiten, ebenfalls C-förmig ausgestalteten Klemmflügel 14. Die beiden Klemmflügel 13, 14 weisen einander zugewandte freie Enden 16 bzw. 17 auf, die in der in den Figuren 1, 2 und 3 dargestellten Sperrstellung der Klammer 12 in geringfügigem Abstand zueinander angeordnet sind.

Das Bracket 11 weist eine Bracketbasis 19 mit einer an einem Zahn befestigbaren Unterseite 20 auf sowie einen von der Bracketbasis 19 oberseitig abstehenden Bracketkörper 22 mit zwei im Abstand zueinander angeordneten Flügelpaaren 24, 25, die jeweils einen in okklusale Richtung weisenden Flügel 27 bzw. 28 und einen in gingivale Richtung weisenden Flügel 29 bzw. 30 umfassen. Zwischen den okklusalseitigen Flügeln 27, 28 und den gingivalseitigen Flügeln 29, 30 erstreckt sich in mesial-distaler Richtung ein Schlitz 32, der in üblicher Weise einen an sich bekannten und deshalb in der Zeichnung nicht dargestellten Bogendraht aufnimmt.

Die beiden Flügelpaare 24, 25 sind über einen Steg 34 einstückig miteinander verbunden, der im Abstand zur Oberseite 36 der Bracketbasis 19 angeordnet ist. Zwischen dem Steg 34 und der Oberseite 36 erstreckt sich in okklusal-gingivaler Richtung ein Durchgang 38, der von der einstückig ausgebildeten Klammer 12 durchgriffen ist. Die Klammer 12 ist am Bracket 11 unverlierbar gehalten, wobei die freien Enden 16, 17 der beiden Klemmflügel 13, 14 in der Seitenansicht oberseitig in den Schlitz 32 eintauchen, sofern sie ihre Sperrstellung einnehmen. Da die freien Enden 16, 17 in Richtung der Bracketbasis 19 geneigt sind, definieren sie oberhalb der Bracketbasis 19 einen Einführabschnitt 40, der sich in Richtung des Schlitzes 32 verjüngt.

Die beiden Flügelpaare 24, 25 bilden gemeinsam mit dem Steg 34 einen Formkörper aus einem Kunststoffmaterial, aus Metall oder auch aus Keramik, der im Bereich der Flügelpaare 24, 25 mit der Bracketbasis 19 verbunden ist.

Zum Einführen eines Bogendrahtes in den Schlitz 32 kann der Bogendraht über den Einführabschnitt 40 in den Bereich zwischen den freien Enden 16, 17 der beiden Klemmflügel 13, 14 eingeführt werden. Beim weiteren Einführen des Bogendrahtes werden die beiden Klemmflügel 13, 14 federelastisch auseinander gespreizt, so dass sie in eine den Schlitz 32 freigebende Freigabestellung übergehen, in der der Bogendraht in den Schlitz 32 abgesenkt werden kann. Nach dem Einsetzen des Bogendrahtes in den Schlitz 32 gibt der Bogendraht die beiden Klemmflügel 13, 14 wieder frei, so dass diese federelastisch wieder in ihre Sperrstellung übergehen, in der sie ein unbeabsichtigtes Herauslösen des Bogendrahtes aus dem Schlitz 32 zuverlässig verhindern.

Die Klammer 12 bildet somit ein Federelement aus, das einen Bogendraht im Schlitz 32 sichert. Die Klammer 12 kann in Form einer Blattfeder beispielsweise aus einem Metall hergestellt sein, wobei sie eine weiche Feder ausbildet. Durch Einbringen von Durchbrechungen 42, 43 in die Klemmflügel 13, 14 kann deren Federcharakteristik günstig beeinflusst werden, so dass die zum Auseinanderspreizen der Klemmflügel 13, 14 erforderliche Klemmkraft angepasst werden kann. Außerdem dienen die Durchbrechungen 42, 43 als Werkzeug-Eingriffshilfe zum Öffnen der Klammer 12.

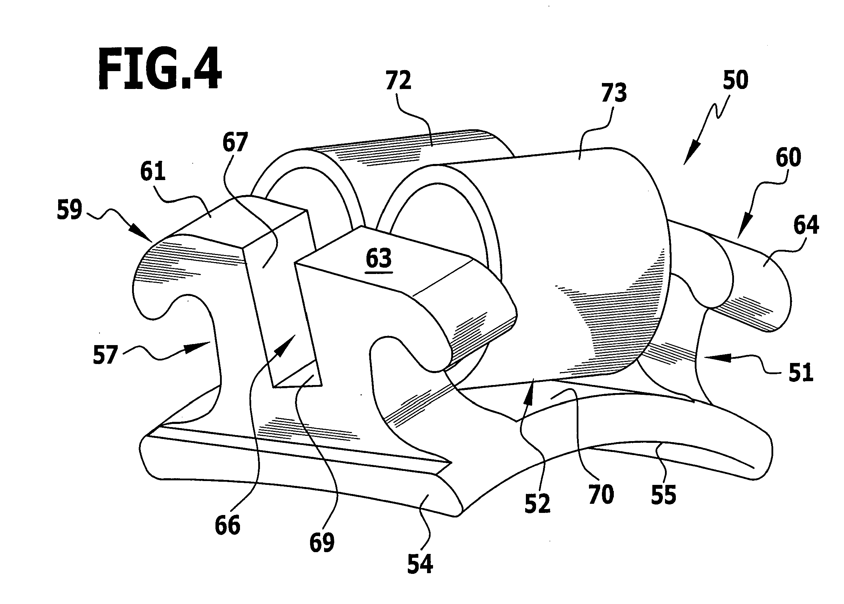

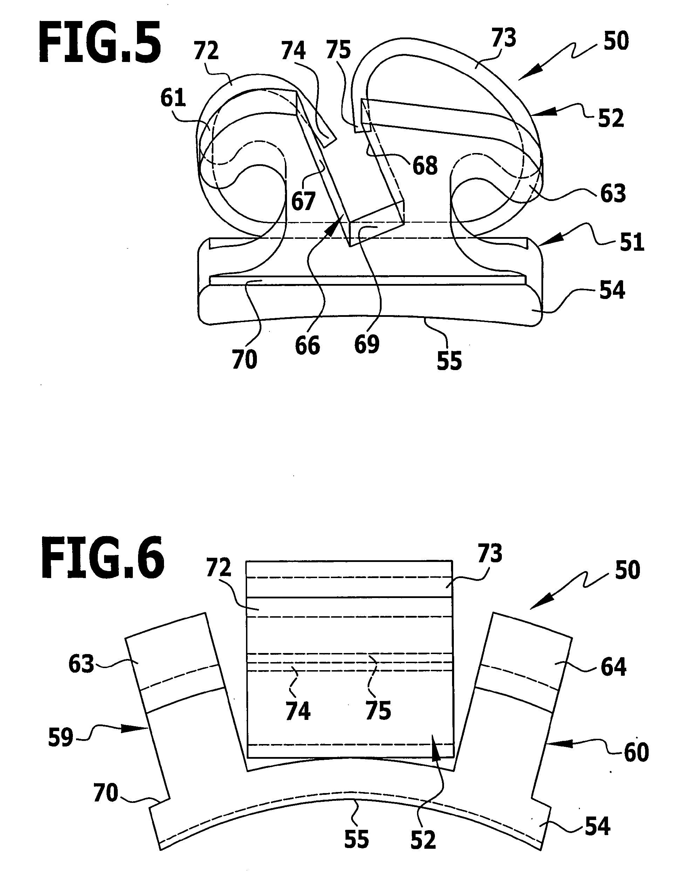

In den Figuren 4, 5 und 6 ist eine insgesamt mit dem Bezugszeichen 50 belegte zweite Ausführungsform einer erfindungsgemäßen orthodontischen Befestigungsvorrichtung dargestellt, die weitgehend identisch ausgebildet ist wie die voranstehend unter Bezugnahme auf die Figuren 1, 2 und 3 erläuterte orthodontische Befestigungsvorrichtung 10. Sie umfasst ein Bracket 51 und eine einstückig ausgebildete Klammer 52. Das Bracket 51 weist eine Bracketbasis 54 auf mit einer sowohl in mesial-distaler Richtung als auch in okklusal-gingivaler Richtung gekrümmten Unterseite 55. Außerdem weist das Bracket 51 einen Bracketkörper 57 auf mit zwei in mesial-distaler Richtung im Abstand zueinander angeordneten Flügelpaaren 59, 60, die jeweils einen in okklusale Richtung weisenden Flügel 61 bzw. 62 und einen in gingivale Richtung weisenden Flügel 63 bzw. 64 umfassen. Zwischen den okklusalseitigen Flügeln 61, 62 und den gingivalseitigen Flügeln 63, 64 verläuft in mesial-distaler Richtung ein Schlitz 66, dessen Schlitzwände 67, 68 im Unterschied zum Schlitz 32 der voranstehend erläuterten orthodontischen Befestigungsvorrichtung 10 zwar parallel zueinander aber schräg zur Oberseite 70 der Bracketbasis 54 ausgerichtet sind. Rechtwinklig zu den Schlitzwänden 67, 68 verläuft der Schlitzboden 69 des Schlitzes 66.

Die Klammer 52 weist entsprechend der voranstehend erläuterten Klammer 12 zwei Klemmflügel 72, 73 auf, die einstückig miteinander verbunden und jeweils ungefähr C-förmig ausgestaltet sind. Die freien Enden 74, 75 der Klemmflügel 72, 73 sind in der Seitenansicht fluchtend zum Schlitz 66 angeordnet, so dass ein in den Schlitz 66 eingefügter Bogendraht von den freien Enden 74, 75 im Schlitz 66 zurückgehalten wird. Durch federelastisches Auseinanderspreizen der freien Enden 74, 75 kann ein Bogendraht in den Schlitz 66 eingeführt und dem Schlitz 66 auch wieder entnommen werden.

Die beiden Flügelpaare 59 und 60 sind im Unterschied zu den Flügelpaaren 24, 25 der voranstehend erläuterten orthodontischen Befestigungsvorrichtung 10 nicht über einen Steg miteinander verbunden, sie stehen vielmehr freistehend von der Oberseite 70 der Bracketbasis 54 ab. In mesial-distaler Richtung ungefähr mittig zwischen den beiden Flügelpaaren 59, 60 ist die Klammer 52 mit der Bracketbasis 54 verschweißt. Sie ist somit im Bereich zwischen den beiden Flügelpaaren 59, 60 unverschieblich am Bracket 51 gehalten und deckt den Freiraum zwischen den beiden Flügelpaaren größtenteils ab.

Die beiden Flügelpaare 59 und 60 bilden in ihrer Gesamtheit den Bracketkörper 57 aus. Gemeinsam mit der Bracketbasis 54 bilden sie einen einstückigen Formkörper aus einem Keramikmaterial, aus einem Metall oder auch aus einem Kunststoff.

## Patentansprüche

1. Orthodontische Befestigungsvorrichtung mit einem Bracket und einem Verriegelungsteil, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst zur Aufnahme eines Bogendrahtes sowie zwei im Abstand zueinander angeordnete Flügelpaare, die jeweils einen in gingivale Richtung und einen in okklusale Richtung vom Schlitz abstehenden Flügel aufweisen, und wobei das Verriegelungsteil eine Klammer umfasst mit zwei Klemmflügeln, deren freie Enden einander zugewandt sind und die zum Einsetzen eines Bogendrahtes in den Schlitz federelastisch aus einer Sperrstellung in eine Freigabestellung auseinander spreizbar sind, **dadurch gekennzeichnet, dass** die orthodontische Befestigungsvorrichtung (10; 50) eine Klammer (12; 52) aufweist, die zwischen den beiden Flügelpaaren (24, 25; 59, 60) angeordnet ist.

2. Orthodontische Befestigungsvorrichtung nach Anspruch 1, **dadurch gekennzeichnet, dass** die orthodontische Befestigungsvorrichtung (10; 50) eine einzige Klammer (12; 52) aufweist, die zwischen den beiden Flügelpaaren (24, 25; 59, 60) angeordnet ist.

3. Befestigungsvorrichtung nach Anspruch 1 oder 2, **dadurch gekennzeichnet, dass** die Klemmflügel (13, 14; 72, 73) C-förmig gekrümmt sind.

4. Befestigungsvorrichtung nach Anspruch 1, 2 oder 3, **dadurch gekennzeichnet, dass** die Klemmflügel (13, 14; 72, 73) einstückig miteinander verbunden sind.

5. Befestigungsvorrichtung nach einem der voranstehenden Ansprüche, **dadurch gekennzeichnet, dass** sich die Klammer (12; 52) in mesial-distaler Richtung von einem ersten Flügelpaar (24; 59) bis zu einem zweiten Flügelpaar (25; 60) erstreckt.

6. Befestigungsvorrichtung nach einem der voranstehenden Ansprüche, **dadurch gekennzeichnet, dass** die Klemmflügel (13, 14; 72, 73) als Federelemente ausgestaltet sind.

7. Befestigungsvorrichtung nach einem der voranstehenden Ansprüche, **dadurch gekennzeichnet, dass** die Klammer (12) einen von okklusal nach gingival verlaufenden Durchgang (38) des Brackets (11) durchgreift.

8. Befestigungsvorrichtung nach Anspruch 7, **dadurch gekennzeichnet, dass** die beiden Flügelpaare (24, 25) über einen Steg (34) miteinander verbunden sind, wobei sich der Durchgang (38) zwischen dem Steg (34) und der Bracketbasis (19) erstreckt.

9. Befestigungsvorrichtung nach einem der voranstehenden Ansprüche, **dadurch gekennzeichnet, dass** die Klammer (52) zwischen den beiden Flügelpaaren (72, 73) am Bracket (51) befestigt ist.

10. Befestigungsvorrichtung nach Anspruch 9, **dadurch gekennzeichnet, dass** die Klammer (52) mit dem Bracket (51) stoffschlüssig verbunden ist.

11. Befestigungsvorrichtung nach einem der voranstehenden Ansprüche, **dadurch gekennzeichnet, dass** der Bracketkörper (22) mit der Bracketbasis (19) stoffschlüssig verbunden ist.
